# EUROPEAN PATENT APPLICATION

(11) **EP 4 677 975 A1**
(43) Date of publication of application: **14.01.2026**
(21) Application number: 24187644.0
(22) Date of filing: 10.07.2024
(51) Int. Cl.: A01B 15/04, A01B 23/02

(54) **BLADE TIP FOR AN AGRICULTURAL CULTIVATION MACHINE**

(71) Applicant: AgriCarb, 69330 Meyzieu (FR)
(72) Inventor: POURNIN, Nicolas, 69330 Meyzieu (FR); MUNOZ, Gabriel, 69330 Meyzieu (FR)
(74) Representative: Ciesla, Dirk

(57) **Abstract**

Blade tip (1) for an agricultural cultivation machine, the blade tip (1) comprising a main body (11) formed from a base material with at least one groove (2) extending from a top surface (5) into the main body (11), the at least one groove (2) having at least one hard material insert (4) mounted therein, such that the hard material insert (4) extends to a side face (12) of the blade tip (1), the blade tip (1) further has a tip portion (31) with a tip recess (3) with a tip insert (41) mounted therein, wherein at least one groove (2) extends forwardly inclined towards the tip insert (41).

## Description

The invention is directed to a blade tip for an agricultural cultivation machine according to the preamble of claim 1.

Blades used in soil cultivation, for example plough tips, cultivator shares, cultivator points, etc. are subjected to excessive wear by abrasive soil. It is known from the art to protect blades against wear by hardfacing or applying hard material plates on exposed surfaces, e.g. by brazing cemented carbide plates onto a base body of the blade.

RU2450496 shows a plough share with a hardfacing welded onto a base body.

EP2938178 A1 discloses a working implement of an agricultural machine with wear-resistant plates brazed or glued on top of the soil working tool.

It is an objective of the present invention to define an improved blade tip for an agricultural cultivation machine. In particular, the blade tip shall exhibit high wear resistance and high mounting stability of wear-resistant elements.

This object is achieved according to the invention as defined in claim 1.

By providing that
the blade tip comprises a main body formed from a base material with at least one groove extending from a top surface into the main body, the at least one groove having at least one hard material insert mounted therein, such that the hard material insert extends to a side face of the blade tip, the blade tip further has a tip portion with a tip recess with a tip insert mounted therein, wherein at least one groove extends forwardly inclined towards the tip insert,
a significantly improved wear resistance of the blade tip is realized.

Moreover, hard material inserts mounted in grooves allow for a thinner blade tip, e.g. plough tip, as compared to the application of a hardfacing or attached hard material plates, which increase the overall thickness of the blade tip. A thinner blade tip enters the soil more easily and shows a lower resistance when being pulled.

The at least one groove extending forwardly inclined towards the tip insert means that the respective groove approaches the tip insert with its groove bottom end. In other words, the groove bottom end of the respective inclined groove, and the hard material insert mounted therein, respectively, gets closer to the tip insert as compared to a situation in which the groove extends perpendicular to the top surface.

By providing that at least one groove extends forwardly inclined towards the tip insert, several particular advantages are achieved:
- through the inclination of the groove, and a hard material insert mounted therein, a greater area of area of hard material is presented at the side faces of the blade tip at a given depth of the groove into the main body, as compared to a situation in which the groove extends perpendicular to the top surface. More hard material means better protection of the side faces.
- through the inclination of the groove, the respective hard material insert at the side face causes an upward acting force component on the soil material, leading to improved shearing action of the blade tip. Further, the required pulling forces are reduced as compared to hard material inserts extending perpendicular to the top surface.
- through the inclination of the groove towards the tip, the hard material insert mounted in the respective groove approaches the blade tip (and thus the tip insert) when seen in a side view perpendicular to a side face. Thus, an unprotected area between that inclined groove and the tip insert is reduced as compared to an assumed extension of the groove that is perpendicular to the top surface.

The at least one groove extends substantially across the blade tip. In particular, the grooves are arranged such that they extend at an obtuse angle with respect to a longitudinal axis of the blade tip.

Preferably, the at least one groove continuously extends from one side face to the opposite side.

Preferably, a hard material insert mounted in the groove as well extend from one side face to the opposite side.

Preferably, a hard material insert mounted in a groove at least partially protrude from the top surface of the blade tip. By this, the hard material insert effectively protects the top surface from the beginning of use. In particular, when there are more than one, all hard material inserts protrude from the top surface, further it is preferred that they protrude from the top surface along their entire extension.

Preferably, a hard material insert mounted in a groove at least partially protrude from or are at least flush with the side faces of the blade tip. By this, the side faces of the blade tip are effectively protected against the abrasive action of the soil material cultivated by the blade tip.

Preferably, it can be provided that the at least one inclined groove is inclined with respect to a surface normal of the top surface at an inclination angle between 10° to 70°, preferably between 20° to 60°, even more preferred, the inclination angle is between 30° and 50°. The inclination angle herein is defined such that an inclination angle of 0° would mean a groove extending perpendicular with respect to the top surface of the blade tip. The angle is measured positive in the sense that an angle greater than 0° means the groove is forwardly inclined towards the tip portion of the blade tip. It was found that an inclination angle between 10° to 70° is preferred. At an inclination angle below 10°, above explained effects are only weakly pronounced. Above 70° of an inclination angle, the respective insert shows an course too shallow, and the mounting stability may be poor.

Preferably is provided that there is a plurality of grooves, and hard material inserts mounted therein.

In particular, it can be provided that a plurality of grooves extending from a top surface into the main body is formed, the grooves having hard material inserts mounted therein, such that the hard material inserts extend to a side face of the blade tip, wherein at least the - with respect to the tip portion - foremost groove extends forwardly inclined towards the tip insert.

"Foremost groove" means that groove that is furthest forward with respect to the tip portion.

In that at least the with respect to the tip portion foremost groove extends forwardly inclined towards the tip insert, in addition to the advantages explained above, further beneficial effects are achieved:
through the inclination of the most forward groove towards the tip, the hard material insert mounted in the respective most forward groove approaches the blade tip (and thus the tip insert) when seen in a side view perpendicular to a side face. In other words, an unprotected area between the most forward hard material insert and the tip insert is reduced as compared to an assumed extension of a groove that is perpendicular to the top surface.

By providing the at least one groove as extending forwardly inclined towards the tip insert, the present invention pursues a counter-intuitive approach:
The forwardly inclined orientation causes a pulling force on the hard material insert mounted in such forwardly inclined groove when considering a soil material flow along the blade tip. In terms of mounting, one would rather foresee a backwardly inclined groove or, at most, a groove that is perpendicular to the top surface, in order to realize a self-locking effect. The latter extension (that is, backwardly inclined or at most perpendicular) would mean that the material guided along the blade tip rather presses the insert in their seats, or grooves, respectively.

The inventors, however, have found that the protective effect of forwardly inclined hard material inserts according to the present invention outweighs possible disadvantages of the insert attachment.

Preferably, it can be provided that at least the foremost groove is inclined with respect to a surface normal of the top surface at an inclination angle between 10° to 70°, preferably between 20° to 60°. The inclination angle herein is defined such that an inclination angle of 0° would mean a groove extending perpendicular with respect to the top surface of the blade tip. The angle is measured positive in the sense that an angle greater than 0° means the groove is forwardly inclined towards the tip portion of the blade tip. An angle of below 0° would mean the groove is backwardly inclined. It was found that an inclination angle between 10° to 70° is preferred. At an inclination angle below 10°, the protective effect of the hard material insert is low, as it approaches the tip portion only in a moderate manner.

At an inclination angle above 70°, the groove and the hard material insert, respectively, approaches the tip portion in a manner too flat, such that the respective groove would need to be distanced far away from the tip portion, in order it could extend sufficiently deep in the base material. As it is preferred that the hard material inserts cover a significant portion of the side faces, meaning that the grooves should extend sufficiently deep from the top surface towards the bottom surface of the blade tip. Further, an angle too flat, e.g. exceeding 70°, would mean that a respective hard material insert extends relatively shallow with respect to the top surface. This would mean that even a moderate wear at the top surface would result in significant exposure of the insert.

In particular, it provided that at least the foremost groove is inclined with respect to a surface normal of the top surface at an inclination angle between 20° to 60°. Even more preferred, the inclination angle is between 30° and 50°.

The preferred ranges of the inclination angle provide a good balance of the desired effect of protection of the side faces and at the same time a good mounting stability.

When the grooves and insert, respectively, extend perpendicular to the top surface, that is, in a manner not according to the invention, the distance between the groove bottom end and the tip insert is large. This results in a large unprotected area between the tip insert and the foremost insert. Unprotected area in this context means an area of exposed base material between an upstream and a downstream hard material insert. The terms "upstream" and "downstream" are used with respect to anticipated flow of soil material along the blade tip.

Thanks to invention, at least an unprotected area between the tip insert and the foremost groove and hard material insert is reduced.

It shall be understood that the grooves and inserts, respectively, should be sufficiently distanced from one another as to provide enough base material between them for proper mounting.

Moreover, it is desirable that the grooves and hard material inserts, respectively are evenly distributed along the blade tip.

It shall be noted that the hard material inserts may be segmented. This means that per groove there may be several, for instance two hard material inserts.

Preferably it is provided that the foremost groove approaches the tip insert with its groove bottom end.

Even more preferably it is provided that a distance between the groove bottom end and the tip insert is at most 20 mm, more preferably the distance is at most 15 mm, even more preferably the distance is at most 10 mm, even more preferably the distance is at most 6 mm. Generally, according to the invention, it is beneficial to have a small distance between the groove bottom end and the tip insert in order to limit the unprotected area of the side faces. However, a lower limit is given by mounting stability considerations, so that the distance should be larger than 2 mm.

Preferably it is provided that at least one the grooves at least partially extend into the main body up to 85 % of a thickness of the main body. More preferably the groove or the grooves extend into the main body up to 80 % of a thickness of the main body. As one can imagine, the main body is weakened by the grooves. When they extend into the main body more than 85% , the remaining material between the groove and the bottom surface is too narrow meaning the mechanical strength my be insufficient.

Preferably the grooves, or at least one the grooves extend at least to 30% of a thickness of the main body. This is beneficial as to protect the side faces of the blade tip through the hard material inserts mounted in the grooves. In other words, the inserts should preferably extend to at least 30% of a thickness of the main body as seen in a side view. When the grooves and the inserts, respectively, extend to less than 30% of the thickness of the main body, large areas of the side faces stay unprotected. In terms of protection against wear it is further preferable that the grooves and hard material inserts, respectively, extend at least to 40% , even more preferable at least to 50% of the thickness of the main body.

Preferably the grooves, or at least one the grooves extend between 50% and 85% of the thickness of the main body, more preferably between 55% and 80%, even more preferably between 55% and 70%. By this, a balanced performance with respect to protection of the side faces and stability of the main body is achieved.

Preferably it is provided that at least three grooves are formed. Depending on the actual size of the blade tip, there can be even more grooves, with hard material inserts mounted therein.

Preferably it is provided that several of the grooves are forwardly inclined towards the tip insert. The inclined orientation has been found beneficial also in that more of the hard material surface is presented at the side face as compared to a straight (meaning perpendicular to the top surface) orientation.

Preferably it is provided that in case several grooves are forwardly inclined, the grooves extend essentially parallel to each other. In this context, "essentially" means that the inclination angles differ only slightly, in particular inclination angles differ at most 10°, even more preferred at most 5°.

It can be provided that at least one of the grooves extend at a slanting angle with respect to a longitudinal axis of the main body, the slanting angle being different from 90°, wherein the angle is measured such that the smallest absolute value (mathematically denoted as "") is obtained. According to this embodiment the grooves and inserts, respectively, have an oblique course. Such oblique course is beneficial as more hard material is offered at the top surface as compared to a straight course meaning a slanting angle of 90°. Furthermore, the oblique course results in a shearing type action on the soil material hitting the hard material insert. The soil material thus receives a force component guiding the material sidewards, resulting in an improved mixing. According to this embodiment, the slanting angle may preferably be between 40° and 85°, more preferably between 50° and 75°, even more preferably between 55° and 70°.

In an embodiment the blade tip is twisted. This means that the main body has a torqued shape. The twisted shape can contribute to improved circulation of the soil material.

It can be provided that the hard material insert protrude from the top surface at a varying level along their extension. This means that a hard material insert may protrude higher from the top surface at one side than on the opposite side of the blade tip.

It can be provided that the blade tip narrows towards the tip portion. This means that the blade tip has a smaller breadth at the tip portion than at its terminal portion. The terminal portion typically serves for mounting of the blade tip on the soil cultivation appliance.

The blade tip may be for a plough tip, a cultivator share, a cultivator point or any other blade tip used in soil cultivation.

The invention is explained in more detail with reference to the figures. The drawings show:
- Fig. 1: a blade tip according to a first exemplary embodiment in a side view
- Fig. 2: the blade of Fig. 1 in a perspective view
- Fig. 3: the blade of Fig. 1 in a top view
- Fig. 4: a detail of the blade tip shown in Figures 1-3
- Fig. 5: a blade tip according to another embodiment
- Fig. 6: a blade tip according to yet another embodiment
- Fig. 7a-7c: a blade tip according to yet another embodiment

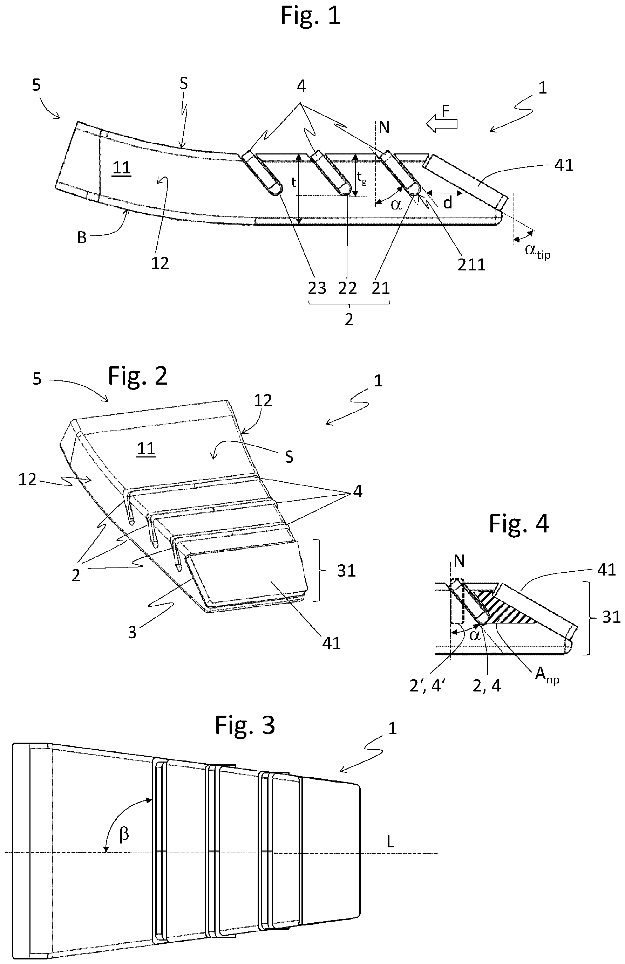

Figure 1 shows a blade tip 1 according to a first exemplary embodiment in a side view perpendicular to a side face 12.

Generally, the blade tip 1 has a generally elongated wedge shape extending between a tip portion 31 and a terminal portion 5. The blade tip 1 may be curved such that the top surface S is concave or convex.

In the present embodiment the blade tip 1 is curved such that the top surface S is concave. An anticipated flow direction F of soil material is indicated by an arrow. Essentially, the soil material flows along the top side S and the side faces 12 of the blade tip 1. The soil material is highly abrasive leading to excessive wear of the base material of the main body 11, which typically is steel or cast iron. For wear protection purposes, the blade tip 1 is equipped with one or more tip inserts 41 protecting the tip portion 31 of the blade tip 1. That is, the blade tip 1 has a tip portion 31 with a tip recess 3 with a tip insert 41 mounted therein.

Further, a plurality of grooves 2 is foreseen, extending from the top surface S into the main body 11, the grooves 2 having hard material inserts 4 mounted therein. In the present embodiment, three grooves 2 are provided. The hard material inserts 4 may be from cemented carbide, typically tungsten carbide with a metallic binder, in particular Cobalt binder, or other suitable hard and wear resistant material as ceramics. The material inserts 4 may be fixed by brazing, glueing, or welding or other suitable technique.

The size of the hard material inserts 4 depends on the actual size and type of the blade tip 1. A length of the blade tip 1 typically is in the range of 150 - 450 mm, in some application even longer. A width of the blade tip 1 typically is in the range of 40 - 150 mm. A thickness t of the blade tip 1 main body 11 typically is in the range of 10 - 50 mm. The thickness of the hard material insert 4 typically is in the range of 1 - 10 mm.

The hard material inserts 4 may be flush with the top side S or protrude from the same. It shall be understood that upon usage of the blade tip 1, hard material inserts 4 soon will protrude given the higher abrasion rate of the base material than that of the hard material inserts 4.

The grooves 2 preferably extend from one side face 12 to the opposite side face.

It can be provided, however, that the grooves are interrupted. In this case, grooves may be formed not throughout the whole width of the blade tip 1, but only partially meaning that in the middle of the top surface S a web remains.

The grooves may, for example, be machined into the main body 11.

The hard material inserts 4 extend to a side face 12 of the blade tip 1. This means that the hard material insert 4 mounted in the groove 2 extends up to a side face 12 in order to provide protection of the side face 12. The hard material insert 4 preferably extends from one side face 12 to the opposite side face.

The hard material inserts 4 may be flush with the side face 12 or protrude from the same.

At least the foremost groove 21 with respect to the tip portion 31 extends forwardly inclined towards the tip insert 41. In other words, at least the foremost groove 21 is inclined at an inclination angle α with respect to a local surface normal N of the top surface S. The inclination angle α is defined such that it is positive when the groove 21 is inclined towards the tip portion 31. As can be seen from the drawing, the inclination effects that a distance d between a groove bottom end 211 of the foremost groove 21 is reduced as compared to situation in which the groove extends along the surface normal N, that is, a groove that is perpendicular to the top surface S. This brings about an improved protection of the area between the tip insert 41 and the hard material insert 4 in the foremost groove 21.

The tip insert 41 is inclined at an tip insert angle αₜᵢₚ. Preferably the tip insert 41 is inclined at an angle larger than the inclination angle α of the foremost groove 21, and respective hard material insert 4 in the foremost groove 21, respectively.

The grooves 2 preferably extend into the main body 11 to a depth - t_{g} - that is 30% to 85% of the thickness - t - of the main body 11. More preferably, the grooves 2 extend to a depth between 55% to 80% , even more preferred between 55% to 70% of the thickness t of the main body 11. A depth t_{g} too deep would impair the stability of the main body 11. A depth t_{g} too small would provide insufficient protection of the side faces 12.

Figure 2 shows the blade tip 1 in a perspective view.

As can be seen from the drawing, the hard material inserts 4 extend across the entire width of the blade tip 1. The material inserts 4 may be segmented or provided as one piece each.

Figure 3 shows the blade tip 1 in a top view. The grooves 2 extend at a slant angle β with respect to a longitudinal axis L of the blade tip 1. In the present embodiment, the slant angle β is 90°, that is, the grooves 2 extend perpendicular to the longitudinal axis L.

It can be foreseen, however, that the grooves 2 extend at a slant angle β different than 90°.

By a slant angle β different than 90° the total length of the hard material inserts is increased as they then have an oblique course. Thus, more hard material is presented effecting an improved protection of the top side S. According to that option, the slant angle β preferably is between 40° and 85°, more preferably between 50° and 75°, even more preferably between 55° and 70°.

Figure 4 shows the tip portion 31 of the blade tip 1 to illustrate the protective effect of the inclined most forward groove 2 and the hard material insert mounted therein. In the figure, an unprotected area Aₙₚ is shown between the tip insert 41 and the most forward hard material insert 4. As can be seen from the drawing the unprotected area Aₙₚ is reduced as compared to an assumed case (not according to the invention) in which the assumed groove 2' and the associated insert 4' are not inclined with respect to the surface normal N.

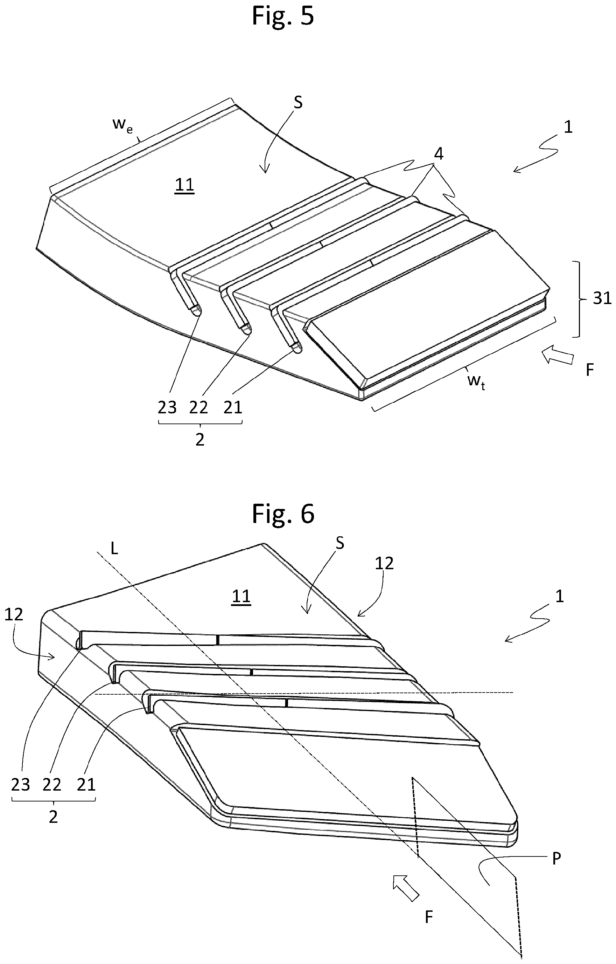

Figure 5 shows a blade tip 1 in another embodiment. Here, the main body 11 has a constant width along its length, as indicated by the end width wₑ at the terminal portion 5 and the tip width wₜ at the tip portion 31 with end width wₑ equals the tip width wₜ in the present embodiment.

Figure 6 shows another embodiment, in which the main boy 11 of the blade tip has a twisted shape. This means that with respect to a sectional plane P dividing the blade tip 1 along the longitudinal axis L into two halves, the respective opposite points on the top surface S are not at the same level as indicated by the auxiliary lines. Such twisted or torqued shape may be beneficial for the soil material circulation. It can be provided that the hard material inserts 4 protrude from the top surface S at different levels with respect to one side face 12 and the opposite side face.

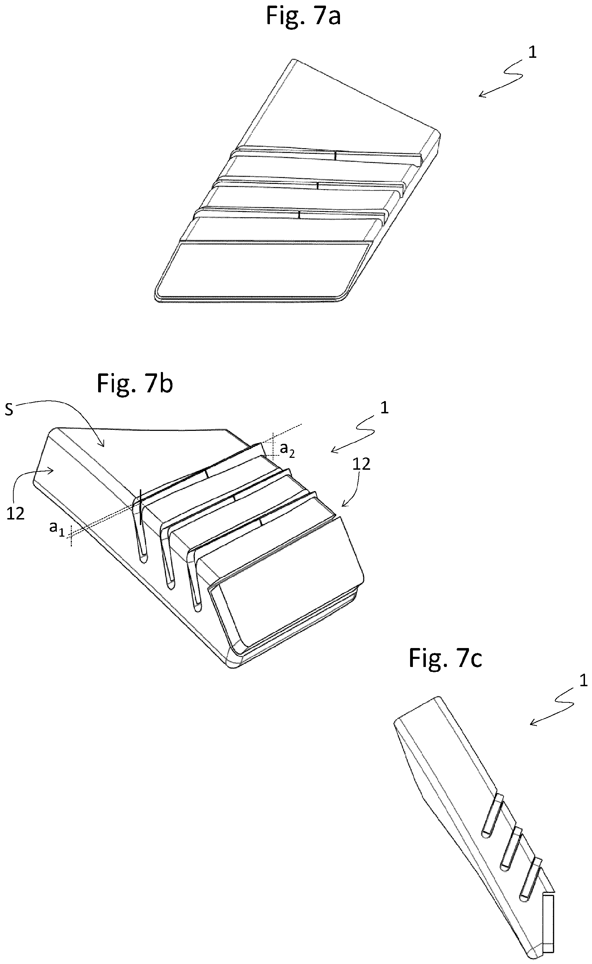

Figures 7a to 7c show different views of a blade tip 1 in yet another embodiment.

Here, the hard material inserts 4 protrude from the top surface S at different extents. At the first side face 12 the material inserts 4 show a first protrusion a₁, at the opposite side face 12 the second protrusion a₂ , with a₁ unequal a₂.

## Claims

1. Blade tip (1) for an agricultural cultivation machine, the blade tip (1) comprising a main body (11) formed from a base material with at least one groove (2) extending from a top surface (S) into the main body (11), the at least one groove (2) having at least one hard material insert (4) mounted therein, such that the hard material insert (4) extends to a side face (12) of the blade tip (1),
the blade tip (1) further has a tip portion (31) with a tip recess (3) with a tip insert (41) mounted therein,
wherein at least one groove (2) extends forwardly inclined towards the tip insert (41).

2. Blade tip (1) as claimed in claim 1, wherein the at least one groove (2) approaches the tip insert (41) with its groove bottom end (211).

3. Blade tip (1) as claimed in claim 1 or 2, wherein the at least one groove (2) is inclined with respect to a surface normal (N) of the top surface (S) at an inclination angle (α) between 10° to 70°, preferably between 20° to 60°.

4. Blade tip (1) according to at least one of the preceding claims, wherein a plurality of grooves (2) extending from a top surface (S) into the main body (11) is formed, the grooves (2) having hard material inserts (4) mounted therein, such that the hard material inserts (4) extend to a side face (12) of the blade tip (1),
wherein at least the - with respect to the tip portion (31) - foremost groove (21) extends forwardly inclined towards the tip insert (41).

5. Blade tip (1) according to at least one of the preceding claims, wherein at least the foremost groove (21) is inclined with respect to a surface normal (N) of the top surface (S) at an inclination angle (α) between 10° to 70°, preferably between 20° to 60°.

6. Blade tip (1) according to at least one of the preceding claims, wherein a distance (d) between the groove bottom end (211) of the foremost groove (21) and the tip insert (41) is at most 20 mm.

7. Blade tip (1) according to at least one of the preceding claims, wherein at least one the grooves (2) at least partially extend into the main body (11) up to 85 % of a thickness (t) of the main body (11).

8. Blade tip (1) according to at least one of the preceding claims, wherein at least one the grooves (2) at least partially extend into the main body (11) at least to 30 % of a thickness (t) of the main body (11).

9. Blade tip (1) according to at least one of the preceding claims, wherein at least three grooves (2) are formed.

10. Blade tip (1) according to at least one of the preceding claims, wherein several of the grooves (2) are forwardly inclined towards the tip insert (41).

11. Blade tip (1) according to at least one of the preceding claims, wherein at least one of the grooves (2) extend at a slanting angle (β) with respect to a longitudinal axis (L) of the main body, the slanting angle (β) being different from 90°.
